# EUROPEAN PATENT APPLICATION

(11) **EP 2 226 465 A1**
(43) Date of publication of application: **08.09.2010**
(21) Application number: 09179767.0
(22) Date of filing: 17.12.2009
(51) Int. Cl.: E21B 43/04, E02D 9/02, E03B 3/15

(54) **Well regeneration method**

(30) Priority: 17.12.2008 IT PI20080130
(71) Applicant: Scardigli, Lodovico, 56028 San Miniato (PI) (IT); Scardigli, Simone, 56028 San Miniato (PI) (IT)
(72) Inventor: Scardigli, Lodovico, 56028 San Miniato (PI) (IT); Scardigli, Simone, 56028 San Miniato (PI) (IT)
(74) Representative: Celestino, Marco

(57) **Abstract**

A well regeneration method (100) comprises a bore hole (10) , an extraction duct, or well casing, (21) put in the bore hole (10), which reaches an aquifer (20), and a filling material (30) that fills the bore hole (10) out of the well casing (21). The method provides the steps of removing the well casing (21) by a coring instrument (50) in order to remove the well casing and to obtain a hole (60), driving perforation probe (70) or scalpel in the hole (60) in order to remove the tilling material (30) and to obtain a bore hole.

## Description

### Field of the invention

The present invention describes a well regeneration method, in particular a water well such as an artesian well.

### Background of the invention

As well known, an artesian well is obtained starting from a bore hole drilled in the ground, in which a tubular duct, or well casing, is inserted, which ends with a slotted or screened portion called "filter". The filter is located at the depth of the aquifer reached by the perforation.

The distance between the filter of the well casing and the wall of the bore hole is filled of selected gravel, or "drain", for draining of the aquifer, in order to ensure the better efficiency during the operation of the well. Furthermore, about the well casing between the ground surface to the filter, also-called "jacket", the bore hole is packed with a not selected filling material, and by means of sealing pads at various depth, made of concrete, which are arranged to insulate the aquifer from possible superficial water.

In certain cases, the well can have more aquifers at different depths, and then more filters are arranged in the bore hole that are separated by relative sealing pads.

The well comprises also a electromechanical system for lifting the water from the underground, consisting of a submersible bore pump of a so-called delivery tube, put in the well casing at a determined depth.

Once ended the installation, the well is operated and a slow wearing process starts, which consists of corrosion of the well casing and of the filter, essentially caused by the electric currents and aggressiveness of water, and of damage to permeability that involves both the filter and the drain, as well as the zone of the aquifer at direct contact with the drain, which tends to jam for physical, chemical or bacterial causes.

Water wells, normally, are subject to maintenance for recovering the hydraulic efficiency that the well progressively looses with time and owing to the above described wearing factors. A process is known for extracting wear and monitoring and/or reducing wear of the filter, as described, for example, in US2006157237.

However, while it is possible to remedy, within certain limits, to the damage of water permeability, it is impossible stop the cause of the corrosion, which can be only limited with a correct choice of the well components. In any case, after a certain period of useful life, the well is damaged, especially owing to wear of the filter and of the well casing located under the filter, also-called "blind casing": ruptures, holes, damaged welding cause the drain to enter the well casing jeopardizing the correct operation of the pump.

When the well has become unserviceable, the problem arises of its change. Normally, a large area is available, another well is made, either close to the previous or elsewhere. However, in either cases of choosing a zone next to the previous well and a distant zone, a new drilling authorization is required, as well as authorization to look for new aquifers according to the law, as well as expropriation in case of private lands.

It should be noted that in order to obtain such authorizations an extremely long may be necessary. For example, in order to exploit the water of a new well the opinion of quality in the field of medical hygiene has to be obtained and at least four times a year a chemical analysis is required, one for season.

Moreover, technical difficulties arise, and new aquifers may be less efficient than previous ones, even in case of a new well drilled a few metres from an old well. This case is not rare, especially in acquifers found in deposits deriving from continental sedimentation.

It is therefore desirable an operative method for changing the "jacket" of the drain, of the concrete pack and of the pads in order to regenerate an old inefficient well. Especial difficulty arises in removing the concrete pads, which prevent the extraction of the well casing because they are fully integral to the walls of the bore hole.

### Summary of the invention

It is therefore a feature of the invention to provide a well regeneration method, which restores the functionality and the hydraulic features of the original well.

It is also a feature of the invention to provide a well regeneration method that does not require authorizations and analysis that are necessary to the construction of a new well.

It is, furthermore, a feature of the invention to provide a well regeneration method that does not need any expropriation of land that is normally necessary for making new wells.

It is still a feature of the invention to provide a well regeneration method that does not require geological studies for defining alternative sites.

It is another feature of the invention to provide a method for regenerating a well that is simple and cost effective.

These and other objects are achieved through a well regeneration method, said well comprising:
- a bore hole that extends underground from a land surface up to reaching an aquifer;
- a well casing having a predetermined cross section, said well casing being put in said bore hole up to said aquifer;
- a filling material that fills said bore hole out of said well casing,
wherein said well casing provides a casing filter portion arranged near said aquifer, and said filling material comprises a draining material at said aquifer, contained between an upper and a lower insulating layer, such that said well casing is flooded with water rising from said aquifer up to a piezometric level, said regeneration method comprising the steps of:
- logging said well casing by a logging instrument having diameter identical or larger than the outer diameter of said well casing, in order to remove said well casing and to obtain a logging hole, said logging instrument comprising a manoeuvre tube within which a cutting tool acts, said manoeuvre tube adapted to support outside the walls of said logging hole;
- filling said logging hole by a fluid foundation material, before extracting stepwise said manoeuvre tube, in order to avoid collapse of the walls of said logging hole;
- putting a perforation probe in said logging hole, for removing said filling material that fills said bore hole about said logging hole, obtaining a new bore hole of predetermined diameter;
- making a new well in said new bore hole, said new well comprising a well casing put in said new bore hole from the land surface up to said aquifer and a filling material that fills said new bore hole out of said well casing.

Advantageously, said logging instrument has a logging diameter between 10% and 50% larger than, in particular 20-40% larger than, the diameter of said well casing. This way, the logging can be carried out in a rapid way.

Advantageously, said cutting tool of said logging instrument carries out a plurality of logging steps, said cutting tool of having horizontal cutting means of the well casing at the end of each logging descent.

Advantageously, said perforation probe has a diameter equal to the diameter of said bore hole in order to remove all said filling material up to reaching the bottom of said bore hole.

In particular, said perforation probe works with a inverse circulation method. Alternatively, said perforation probe works with a direct circulation method.

Preferably, said perforation probe has a diameter that is larger than the diameter of said bore hole. This way, is possible to eliminate the jammed zone at said aquifer that is in direct contact with the drain. In particular, the diameter of said perforation probe is 1-40% larger than the of the diameter of the starting bore hole, in particular 10-30% larger than the diameter of the starting bore hole.

In particular, said foundation material is low density mud.

### Brief description of the drawings

The invention will be made clearer with the following description of some of its exemplary embodiments, exemplifying but not limitative, with reference to the attached drawings in which:
- figure 1 shows a diagrammatical view of a structure of artesian well, according to the prior art;
- figures 2 and 3 show a logging step, according to the invention, carried out for extraction of the well casing;
- figure 4 shows a cross sectional view of the logging hole obtained by the logging step of Figs. 2 and 3;
- figures 5 and 6 show a following step of perforation made by a perforation probe, that is adapted to eliminate the filling material arranged about the well casing, to obtain a new bore hole from which a new well is obtained.

### Description of referred exemplary embodiments

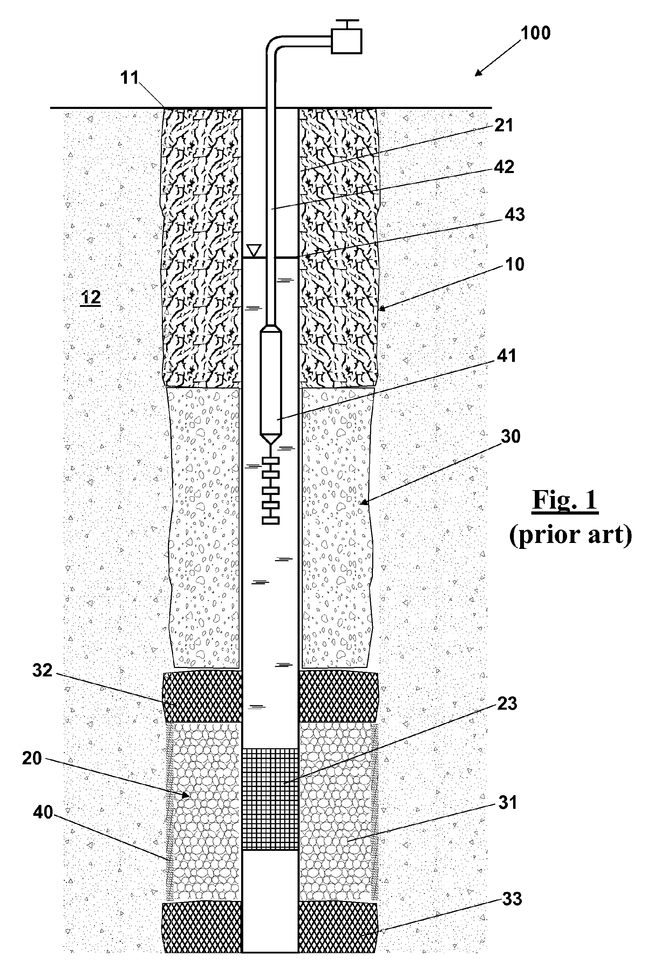

With reference to Fig. 1, a well 100 for extraction of water, according to the prior art, comprises a bore hole 10 that extends from a land surface 11 into the underground 12 up to reaching an aquifer 20, an extraction duct, or well casing, 21 put in bore hole 10, which reaches the aquifer 20, and a filling material 30 that fills bore hole 10 out of well casing 21.

In particular, well casing 21 includes a casing filter portion 23, or filter casing, which is arranged at the depth of aquifer 20 whereas filling material 30 comprises a selected draining material 31 contained between an upper layer 32 and a lower layer 33, or pad, that is adapted to insulate aquifer 20 from external infiltration. Furthermore, filling material 30, as well known, comprises a surface layer 34 such as, for example, a concrete layer and a not selected filling draining layer 35 arranged above the upper insulating layer 32.

This way, the water floods well casing 21 starting from aquifer 20 up to reaching a piezometric level 43. Then, through a bore pump 41 arranged in well casing 21, submersed under the piezometric level 43, the water is delivered to the surface through a delivery duct 42.

When the well has become unserviceable, the problem arises of its change due to an unavoidable wearing process, which consists both of corrosion of well casing 21 and of filter 23, essentially due to eddy currents and to aggressiveness of water, with damage to permeability concerning both the filter and drain 31 as well as the zone of aquifer 40 that is at direct contact with drain 31, which tends to jam for physical, chemical or bacterial causes.

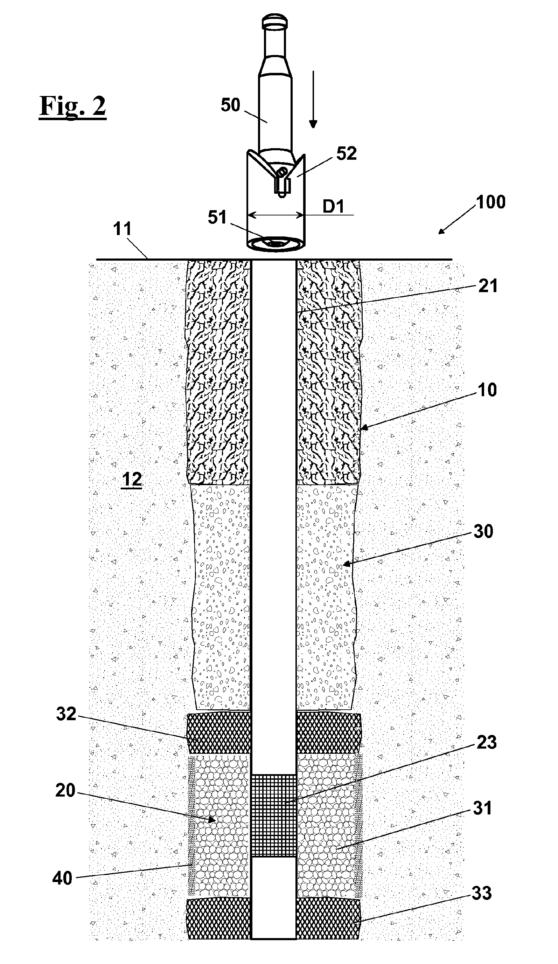

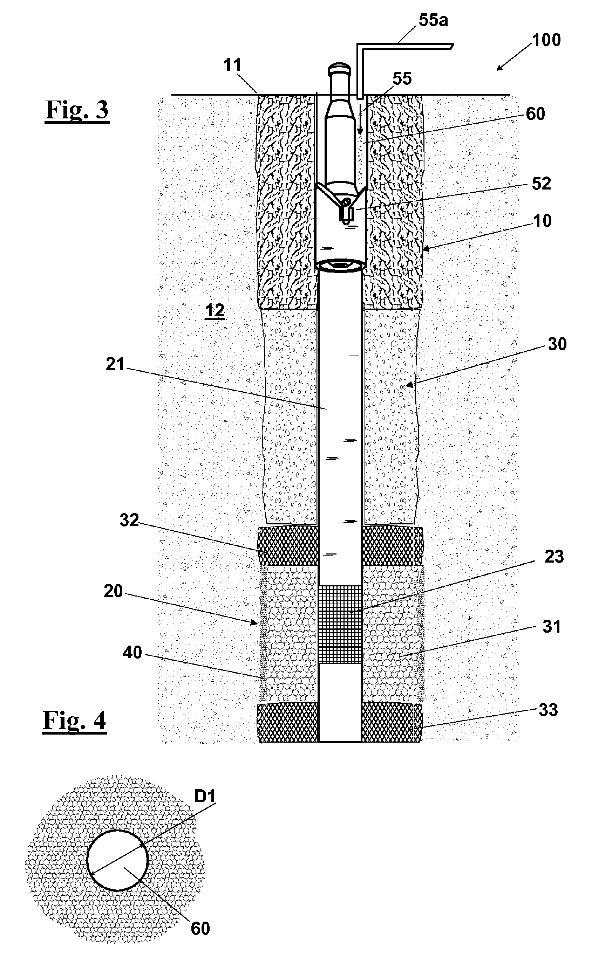

According to the invention, then, a method for regenerating well 100 as shown in Fig. 2, and following figures, comprises the steps of logging well casing 21 by a logging instrument 50, which has a diameter D1 identical or larger than the outer diameter of well casing 21, in order to remove the latter and to obtain a logging hole 60, whose cross sectional view is shown in Fig. 4.

In particular, logging instrument 50 comprises a manoeuvre tube 52 within which a cutting tool acts 51 for supporting from outside the walls of logging hole 60, as visible in Fig. 3.

Actually, the diameter of logging instrument 50 has a logging diameter 20-40% larger than well casing 21.

In parallel to the logging operation, as diagrammatically shown in Fig. 3, logging hole 60 is filled in turn with a fluid foundation material 55, before extracting stepwise manoeuvre tube 52, in order to avoid collapse of the walls of logging hole 60 and not to cause detachment of the walls that would remarkably negatively affect the successive operations.

In particular, the fluid foundation material is a low density mud 55 that is inserted through a duct 55a directly into logging hole 60, in order to ensure a compromise between fluidity and support to the walls of the bore hole. In fact, if the mud is too dense a good support to the walls of logging hole 60 is ensured and logging operations are easier, but the following operations of extraction of the same from the well and, in particular, from the aquifer, is complex.

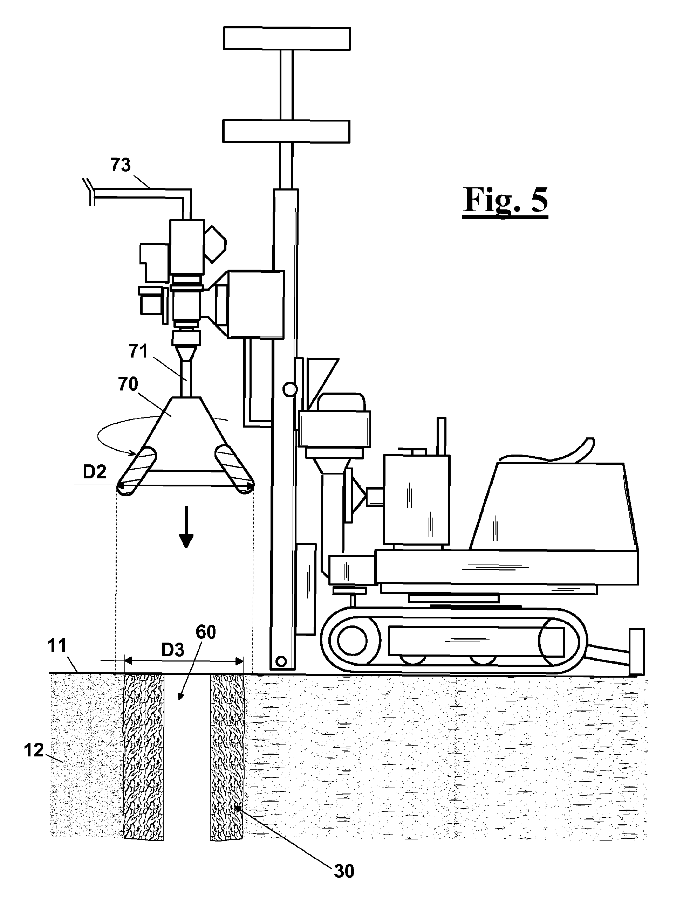

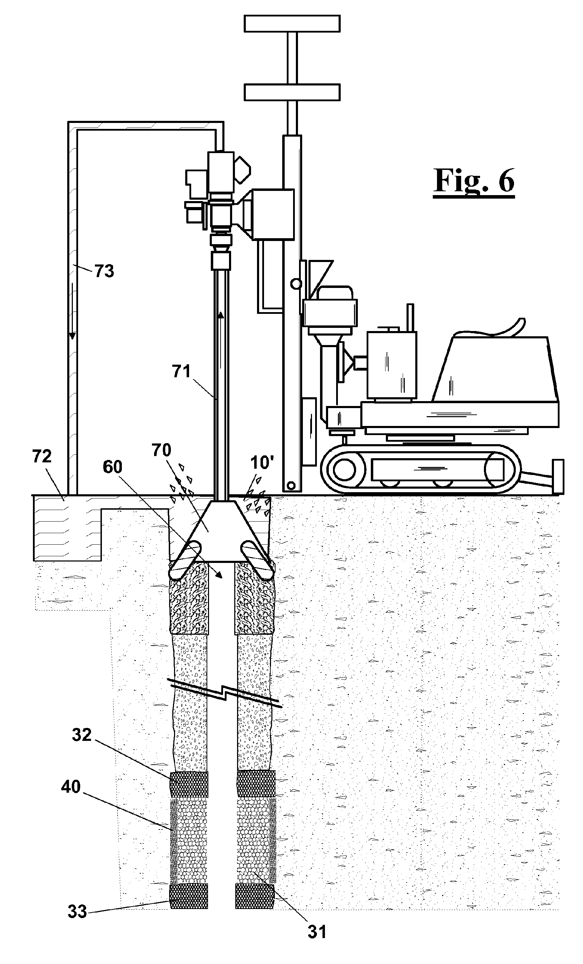

The successive step of the method according to the invention, as shown in Fig. 5 and 6, provides a perforation probe 70 or scalpel driven into logging hole 60 in order to remove filling material 30 present in the bore hole about logging hole 60. Once completed this step up to reaching the bottom of the well, a bore hole 10', is obtained, as shown partially in Fig. 6.

In the operation perforation probe 70 works with a to reverse circulation method, alternatively, with a direct circulation method.

With these methods, the action of perforation is carried out by rotationally moving a scalpel 70 that grinds and cuts gradually the ground that derives from the perforation, giving rise to the production of the debris. In the reverse circulation the extraction of the debris is made through compressed air put into a perforation rod 71 that protrudes above the tool 70. This way, the density of the perforation fluid is reduced and a pressure differential is created that raises the fluid in the rod 71. The mud and the debris are then discharged outside from a duct 73, into a mud basin 72, visible in Fig. 6.

In particular, as shown in Fig. 5, a perforation probe 70 is chosen responsive to the diameter D3 of the previous bore hole 10 and in an advantageous way that has a diameter D2 larger than the diameter D3 of the latter, in order to remove completely filling material 30 up to the bottom of the bore hole.

Actually, the diameter D2 of the perforation probe 70 is 10-30% more than the diameter D3 of the starting bore hole.

For example, in an exemplary embodiment, the diameter of logging instrument 50 is about 400-500 mm for logging a well casing 21 of diameter 200-300 mm. Instead, the diameter D2 of the perforation probe 70 is about 800 mm for a diameter D3 of the starting bore hole 10 of 600 mm.

Adopting a larger diameter, in fact, it is possible to eliminate the jammed zone 40, at aquifer 20 at direct contact with drain 31.

The final step of the method according to the invention provides a new well starting from bore hole 10' thus obtained. More precisely, the in the well a casing is put in the new bore hole from the land surface up to aquifer 20 and a structurally distributed filling material as above described is added that fills bore hole 10' out of the cross sectional view of the extraction duct.

In conclusion, such a regeneration method allows regenerating an old and ineffective well avoiding the technical-burochratic iter that are necessary to the construction of a well and to obtain a well with the same hydraulic features of the original.

The foregoing description of a specific embodiment will so fully reveal the invention according to the conceptual point of view, so that others, by applying current knowledge, will be able to modify and/or adapt for various applications such an embodiment without further research and without parting from the invention, and it is therefore to be understood that such adaptations and modifications will have to be considered as equivalent to the specific embodiment. The means and the materials to realise the different functions described herein could have a different nature without, for this reason, departing from the field of the invention. It is to be understood that the phraseology or terminology employed herein is for the purpose of description and not of limitation.

## Claims

1. A well regeneration method, said well comprising:
- a bore hole that extends underground from a land surface up to reaching an aquifer;
- a well casing having a predetermined cross section, said well casing being put in said bore hole from the land surface up to said aquifer;
- a filling material that fills said bore hole out of said well casing,
wherein said well casing provides a casing filter portion arranged near said aquifer, and said filling material comprises a draining material, at said aquifer, contained between an upper and a lower insulating layer, such that said well casing is flooded with water rising from said aquifer up to a piezometric level, said regeneration method **characterised in that** it comprises the steps of:
- logging said well casing by a logging instrument having diameter identical or larger than the outer diameter of said well casing, in order to remove said well casing and to obtain a logging hole, said logging instrument comprising a manoeuvre tube within which a cutting tool acts, said manoeuvre tube adapted to support outside the walls of said logging hole;
- filling said logging hole by a fluid foundation material, before extracting stepwise said manoeuvre tube, in order to avoid collapse of the wall of said logging hole;
- putting a perforation probe in said logging hole, for removing said filling material that fills said bore hole about said logging hole, obtaining a new bore hole of predetermined diameter;
- making a new well in said new bore hole, said new well comprising a well casing put in said new bore hole from the land surface up to said aquifer and a filling material that fills said new bore hole out of said well casing.

2. A regeneration method, according to claim 1, wherein said logging instrument has a logging diameter 10-50%, in particular 20-40%, larger than the diameter of said well casing.

3. A regeneration method, according to claim 1, wherein said cutting tool of said logging instrument carries out a plurality of logging steps, said cutting tool having horizontal cutting means of the well casing that act stepwise at the end of each logging step.

4. A regeneration method, according to claim 1, wherein said perforation probe has a diameter equal to the diameter of said bore hole in order to remove all said filling material up to reaching the bottom of said bore hole.

5. A regeneration method, according to claim 1, wherein said perforation probe works with a inverse circulation method.

6. A regeneration method, according to claim 1, wherein said perforation probe works with a direct circulation method.

7. A regeneration method, according to claim 1, wherein said perforation probe has a diameter that is larger than the diameter of said bore hole.

8. A regeneration method, according to claim 7, wherein the diameter of said perforation probe is 1-40% larger than the diameter of the starting bore hole, in particular 10-30% more than the diameter of the starting bore hole.

9. A regeneration method, according to claim 1, wherein said foundation material is low density mud.
